(19) **Europäisches Patentamt / European Patent Office / Office européen des brevets**

(11) **EP 2 360 643 A1**

(12) **EUROPEAN PATENT APPLICATION**

(43) Date of publication:
**24.08.2011 Bulletin 2011/34**

(51) Int Cl.:
***G06T 11/00*** (2006.01)

(21) Application number: **10150912.3**

(22) Date of filing: **15.01.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Universiteit Gent**
**9000 Gent (BE)**

(72) Inventors:
• **Staelens, Steven**
  **9820 Merelbeke (BE)**
• **Crevecoeur, Guillaume**
  **9070 Destelbergen (BE)**

(74) Representative: **Wauters, Davy Erik Angelo et al**
**DenK IP bvba**
**Pastoor Ceulemansstraat 3**
**3191 Schiplaken (Hever) (BE)**

(54) **Methods and systems for image reconstruction**

(57)   The present invention relates to a method for performing tomography image reconstruction, the method comprising applying an analytical inverse model for backprojecting a reconstructed image from first tomography projection data and applying a forward Monte Carlo model on the reconstructed image or an image based thereon for deriving second tomography projection data. The method also comprises performing space mapping between the analytical inverse model and the Monte Carlo model.

**FIG. 2**

EP 2 360 643 A1

**Description**

**Field of the invention**

The invention relates to the field of image reconstruction. More particularly, the present invention relates to methods and systems for reconstructing images based on Monte Carlo simulations, e.g. in tomography such as in SPECT (Single Photon Emission computed Tomography) or PET (Positron Emission Tomography).

**Background of the invention**

Non-invasive diagnostic imaging can be performed with different technologies which return anatomical information, and also with Single Photon Emission computed Tomography (SPECT) and Positron Emission Tomography (PET) which return functional information. In nuclear medicine examinations, a radiopharmaceutical is injected in the patient, marked with a radionuclide emitting one single photon in SPECT. Those photons are detected, and the acquired data is afterwards reconstructed to result in a three dimensional radioactive tracer distribution within the patient.

Monte Carlo methods are numerical calculation methods based on random variable sampling. The Monte Carlo method is very appropriate for medical physics due to the stochastic nature of radiation emission, particle transport and detection processes.

Although different attempts were made to obtain workable solutions that can reconstruct clinical datasets in an acceptable time frame using a Monte Carlo reconstruction, due to long iteration times and slow convergence none of these have resulted in a sufficient detectability and thus none of these have reached clinical maturity until today.

**Summary of the invention**

It is an object of embodiments of the present invention to provide good methods and systems for image reconstruction for tomography. It is an advantage of embodiments according to embodiments of the present invention that systems and methods are obtained that are efficient as well as accurate. It is an advantage of embodiments according to the present invention that a relatively high convergence speed for iterative image reconstruction algorithms is obtained. Embodiments of the present invention thus allow clinical applicability of patient-specific Monte Carlo based image reconstruction.

It is an advantage of embodiments according to the present invention that solutions with a high detectability of e.g. tumors are obtained, resulting in a better sensitivity or specificity performance. It is an advantage of embodiments according to the present invention that a patient-specific reconstruction method is obtained. It is an advantage of embodiments according to the present invention that good iterative algorithms using Monte Carlo simulations for image reconstruction can be obtained. It is an advantage of embodiments according to the present invention that space mapping techniques are used, resulting in an improved convergence speed of the iterative reconstruction algorithms. The obtained methods and systems result in enhanced tumor detectability based on Monte Carlo techniques in clinically realistic reconstruction times.

It is an advantage of embodiments according to the present invention that by using space mapping techniques not only change is taken into account but also evolution is taken into account when updating during the iteration process. The latter results in the intelligent use of the information that resides in the acquired data.

It is an advantage of embodiments according to the present invention that use can be made of a processor providing sufficient computational power which nowadays typically may be present in clinical scanners by default.

The above objective is accomplished by a method and device according to the present invention.

A method for performing tomography image reconstruction, the method comprising applying an analytical inverse model for reconstructing a reconstructed image from first tomography projection data, and applying a forward Monte Carlo model on the reconstructed image or an image based thereon for deriving second tomography projection data, the method comprising performing space mapping between the analytical inverse model and the Monte Carlo model. It is an advantage of embodiments according to the present invention that an accurate but at the same time efficient algorithm can be obtained. It is an advantage of embodiments according to the present invention that the reconstruction of images, based on the Monte Carlo model and assisted by an analytical model and the space mapping scheme, are accurate, while a good computational efficiency is obtained, e.g. a reduction of the computational burden is obtained. It has surprisingly been found that space mapping can efficiently be applied using a model simulating the tomography setup.

The method furthermore may comprise comparing the obtained second tomography projection data with the first tomography projection data and, if predetermined criteria are not fulfilled, determining new first tomography projection data based on the derived second tomography projection data for iteratively applying the analytical inverse model and subsequently applying the forward Monte Carlo model. It is an advantage of embodiments according to the present invention that a computational efficient iterative reconstruction method is obtained.

Space mapping may comprise mapping between a parameter space of the Monte Carlo model and a parameter space of the analytical inverse model and/or mapping between a response space of the Monte Carlo model and a response space of the analytical inverse model.

Space mapping may comprise performing a parameter extraction step by applying the analytical inverse reconstruction algorithm to tomography data obtained using the Monte Carlo model.

The Monte-Carlo model may be a patient specific Monte-Carlo model. It is an advantage of embodiments according to the present invention that an object specific, e.g. patient specific model can be used. The latter may include image degrading effects such as patient-specific scatter and attenuation. It is also an advantage of embodiments according to the present invention that the experimental settings are taken into account, such as for example distance-dependent collimator resolution, configuration of source, object and detector, etc. It is an advantage of embodiments according to the present invention that the system is based on a commonly appreciated accurate forward model currently existing.

The method may comprise using evolutionary data based on previously obtained tomography data for determining the new first tomography projection data for a subsequent iterative process. It is an advantage of embodiments according to the present invention that evolutionary information from the past iterations can be used, allowing fast convergence.

The method may comprise using evolutionary data based on previously obtained reconstructed images. It is an advantage of embodiments according to the present invention that evolutionary information from the past iterations can be used at different levels, e.g. at the level of converging of the images obtained as well as at the level of converging to the projections.

The method may comprise applying a trust-region strategy. It is an advantage of embodiments according to the present invention that features of known techniques can easily be combined with the methods according to embodiments of the present invention.

The reconstruction algorithm may be hybridized with a conventional reconstruction algorithm that only uses the Monte Carlo simulation method.

The method may be a computer implemented method. The method may be implemented as a computer program product.

The method may be adapted for receiving tomography data previously recorded and thus the present invention also relates to embodiments wherein the method does not comprise the step of capturing of the tomography data. The method may be initiated by receiving previously recorded data.

The present invention also relates to a system for performing image reconstruction, the system comprising a processor wherein the processor comprises an analytical inverse modeling means for analytically inverse modeling of first tomography projection data for reconstructing a reconstructed image, a forward Monte Carlo modeling means for forward Monte Carlo modeling of the reconstructed image or an image based thereon for deriving second tomography projection data, and the processor being programmed for performing space mapping between the analytical inverse model and the Monte Carlo model.

The processor may be programmed for mapping the parameter space of the Monte Carlo model to the parameter space of the analytical inverse model.

The system furthermore may be adapted for performing a method as described above.

The system furthermore may be adapted for obtaining, e.g. receiving or recording, tomography data. The system may be adapted for receiving tomography data previously recorded and thus the present invention also relates to embodiments wherein the system is not adapted for capturing of the tomography data.

The present invention also relates to use of a system as described above for performing tomography image reconstruction.

The present invention also relates to a computer program product for, when executed on a computer, performing a method for tomography image reconstruction as described above.

The present invention furthermore relates to a machine readable data storage device storing the computer program product as described above or to the transmission of the computer program product over a local or wide area telecommunications network.

Particular and preferred aspects of the invention are set out in the accompanying independent and dependent claims. Features from the dependent claims may be combined with features of the independent claims and with features of other dependent claims as appropriate and not merely as explicitly set out in the claims. These and other aspects of the invention will be apparent from and elucidated with reference to the embodiment(s) described hereinafter.

**Brief description of the drawings**

FIG. 1 illustrates a schematic representation of a computing system that may be used for performing a method according to an embodiment of the present invention.

FIG. 2 illustrates a schematic representation of a flow chart of an exemplary reconstruction algorithm according to an embodiment of the present invention.

Any reference signs in the claims shall not be construed as limiting the scope.

**Detailed description of illustrative embodiments**

Where in embodiments according to the present invention reference is made to tomography, reference is made to imaging by sectioning through the use of waves of energy. Tomography involves gathering projection data from multiple directions and using a tomographic software algorithm for reconstructing the object imaged. Tomography may for example include CT imaging using X-rays, SPECT using gamma rays, PET using electron-positron annihilation, electron tomography using electrons and atom probing using ions.

Where in embodiments according to the present invention reference is made to a coarse model, also referred to as low level model, reference is made to a model providing a lower accuracy than at least one other model used. In some embodiments according to the present invention, the coarse model is an analytical model that reconstructs the image for given recorded projection data.

Where in embodiments of the present invention reference is made to a fine model, also referred to as high level model, reference is made to a model providing a higher accuracy than at least one other model used in the method or system. In embodiments according to the present invention, the fine model is a Monte Carlo model. Monte Carlo models thereby are models that use repeated random sampling of probability distribution functions as model input to compute their results.

Where in embodiments according to the present invention reference is made to space mapping, reference is made to a technique wherein a mapping is performed of the parameter spaces used in different models used and/or a mapping is performed in the output spaces of the different models. In this way, fast reconstruction can be carried out using a surrogate model that is based on the analytical model with incorporation of the mapping or multiple mappings. Iteratively, this surrogate model or space-mapped coarse model can be refined so that it approximates the Monte Carlo model. In this way, reconstruction using this surrogate model provides approximately equal results to the reconstruction using the Monte Carlo model only, but on a substantially shorter time scale.

Where in embodiments according to the present invention reference is made to first tomography projection data and/or second tomography projection data, reference is made to projection data such as recorded projection data or projection data previously obtained through simulation. The projection data may, in one representation, be referred to as sinogram(s). Where used in an iterative loop, first and second tomography projection data may refer to one set of tomography projection data and respectively a next generation set of tomography projection data, obtained by applying the first and second model. In an iterative algorithm, the second tomography projection data of the previous iteration step may be used as first tomography projection data in the subsequent iteration step.

In one aspect, the present invention relates to a method and system for tomography image reconstruction. The method may be especially advantageous for Positron Emission Tomography (PET) and Single Photon Emission computed Tomography (SPECT), although the invention is not limited thereto. The method is especially suitable for those applications where Monte Carlo simulations provide an accurate model of the physical effects occurring. According to embodiments of the present invention, a method may comprise using at least two models, e.g. two models, for performing image reconstruction. A first model typically is an analytical inverse model for reconstructing a reconstructed image from first tomography projection data, i.e. from projection data such as recorded projection data or projection data previously obtained through simulation. Typical algorithms that may be used can be an ordered subset-expected maximization (OS-EM), although also others can be used, such as for example maximum likelihood expectation maximization (MLEM), Algebraic Reconstruction Technique (ART), Simultaneous Iterative Reconstructive technique (SIRT),...... The analytical inverse model advantageously is a model that is computationally more efficient than a Monte Carlo model. Advantageously, the first model may be selected such that it is fast in comparison with the computational time of the fine model so that an ultrafast convergence is obtained. Advantageously, the first model also may be selected such that it is so accurate and patient specific that it remains accurate enough for accurate convergence. The method also comprises applying a forward Monte Carlo model on the reconstructed image or an image based thereon, for deriving second tomography projection data. It is an advantage of embodiments according to the present invention that it is based on a Monte Carlo model, as this allows accurate modeling. Furthermore, Monte Carlo allows to make an object specific model, such as a patient specific model. It may take into account the scatter and attenuation which is object specific. It furthermore can take into account the setting under which the measured data was recorded : depth-dependent spatial blurring, intrinsic camera resolution, etc.. The second tomography projection data can be simulated projected data and can be compared with the originally used projected data. Comparing such data will allow evaluating indirectly whether or not the reconstructed image is an appropriate image of the object of interest. According to embodiments of the present invention, the method also comprises performing space mapping between the analytical inverse model and the Monte Carlo model. Such space mapping may include mapping the parameter space of the Monte Carlo model to the parameter space of the analytical inverse model or may include mapping the response space of the Monte Carlo model to the response space of the analytical inverse model. The space mapping may comprise performing a parameter extraction step by applying the analytical inverse reconstruction algorithm to tomography data obtained using the Monte Carlo model. In embodiments according to the present invention, the steps typically may be applied in an iterative manner, i.e. resulting in an nested iterative reconstruction technique on top of OSEM. An advantage of embodiments according to the present invention is that a computational efficient system is obtained with enhanced convergence when maximizing the expectation of the maximum likelihood that the reconstructed image is the correct representation of the patient.

Due to the space mapping, the method according to embodiments of the present invention may make use of evolutionary data based on previously obtained tomography projection data for determining the new first tomography projection data for a subsequent iterative process. In other words, not only the difference with the previous tomography projection data but also the way the difference has evolved during iteration can be taken into account in the reconstruction, resulting in a quicker convergence. Similarly, the method can also use evolutionary data based on previously obtained reconstructed images. In other words, not only the difference with the previous reconstructed image but also the way the difference has evolved during the iterations can be taken into account in the reconstruction, resulting in a quicker convergence. Evolutionary data can be introduced by evaluating e.g. the change in responses respectively to the change in parameter values in both models, i.e. the first and higher order derivatives of the output to the input of both models. This evolutionary data can be obtained by finite differentiation of the outputs. Other features and advantages of embodiments according to the present invention will be illustrated with reference to examples as given below.

In one aspect, the present invention relates to a system for performing tomography, such as for example PET or SPECT although embodiments of the present invention are not limited thereto. The tomography system thereby may comprise a source for energy waves, a detector for recording projections of an object after interaction of the energy waves with an object of interest. The system comprises a processor for reconstructing an image of the object of interest based on the recorded projections. The processor for reconstructing an image of the object of interest thereby is adapted for performing a method for image reconstruction as set out in embodiments described in the present invention. The hardware components of the system may in some embodiments be similar to known tomography systems, except for the processor that is programmed for performing a method for image reconstruction as set out in embodiments described in the present invention. Typically, the total amount of time for reconstruction of the image using a conventional method is equal to the product of the number of iterations and the average time for computing one Monte Carlo model. In embodiments of the present invention, the total amount of time for reconstruction using space mapping equals the product of the number of iterations on the one hand and the sum of the average calculation times for applying the first model and for applying the second model. Through use of some embodiments of the present invention, the convergence speed can be improved by an order of magnitude, compared to conventional algorithms.

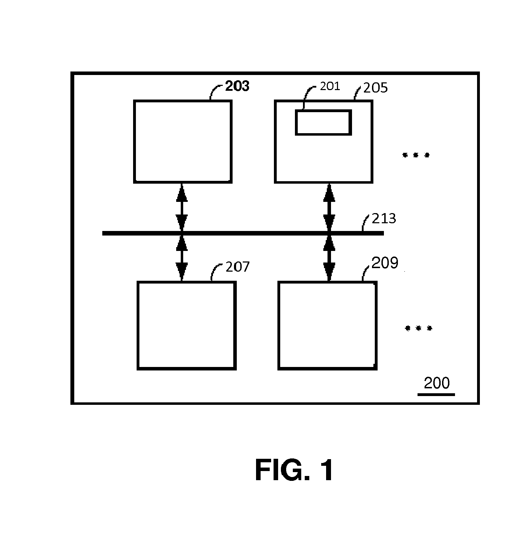

In yet another aspect, the present invention relates to a processing system or processor wherein the method or system for reconstructing tomography images as described in embodiments of the previous aspects are implemented in a software based manner. Fig. 1 shows one configuration of a processing system 200 that includes at least one programmable processor 203 coupled to a memory subsystem 205 that includes at least one form of memory, e.g., RAM, ROM, and so forth. It is to be noted that the processor 203 or processors may be a general purpose, or a special purpose processor, and may be for inclusion in a device, e.g., a chip that has other components that perform other functions. Thus, one or more aspects of embodiments of the present invention can be implemented in digital electronic circuitry, or in computer hardware, firmware, software, or in combinations of them. The processing system may include a storage subsystem 207 that has at least one disk drive and/or CD-ROM drive and/or DVD drive. In some implementations, a display system, a keyboard, and a pointing device may be included as part of a user interface subsystem 209 to provide for a user to manually input information. Ports for inputting and outputting data also may be included. More elements such as network connections, interfaces to various devices, and so forth, may be included, but are not illustrated in Fig. 1. The various elements of the processing system 200 may be coupled in various ways, including via a bus subsystem 213 shown in Fig. 1 for simplicity as a single bus, but will be understood to those in the art to include a system of at least one bus. The memory of the memory subsystem 205 may at some time hold part or all (in either case shown as 211) of a set of instructions that when executed on the processing system 200 implement the steps of the method embodiments described herein. More particularly, the memory may comprise instructions for applying a backward analytical projector, a forward Monte Carlo model, a tomography projection data comparator, an image comparator, an evolutionary information extractor, etc. Thus, while a processing system 200 such as shown in Fig. 1 as such is prior art, a system that includes the instructions to implement aspects of the methods for reconstructing tomography images is not prior art, and therefore Fig. 1 is not labeled as prior art. The processor may be adapted for performing processing steps or all of the method according to embodiments of the present invention using a central processing unit, a graphical processing unit or a combination thereof.

The present invention also includes a computer program product which provides the functionality of any of the methods according to the present invention when executed on a computing device. Such computer program product can be tangibly embodied in a carrier medium carrying machine-readable code for execution by a programmable processor. The present invention thus relates to a carrier medium carrying a computer program product that, when executed on computing means, provides instructions for executing iterative image reconstruction according to any of the methods as described above. The term "carrier medium" refers to any medium that participates in providing instructions to a processor for execution. Such a medium may take many forms, including but not limited to, non-volatile media, and transmission media. Non volatile media includes, for example, optical or magnetic disks, such as a storage device which is part of mass storage. Common forms of computer readable media include, a CD-ROM, a DVD, a flexible disk or floppy disk, a tape, a memory chip or cartridge or any other medium from which a computer can read. Various forms of computer readable media may be involved in carrying one or more sequences of one or more instructions to a processor for execution. The computer program product can also be transmitted via a carrier wave in a network, such as a LAN, a WAN or the Internet. Transmission media can take the form of acoustic or light waves, such as those generated during radio wave and infrared data communications. Transmission media include coaxial cables, copper wire and fibre optics, including the wires that comprise a bus within a computer.

By way of illustration, embodiments of the present invention not being limited thereto, a mathematical expression of an exemplary method according to an embodiment of the present invention is described below. Embodiments of the present invention also are not limited to or restricted by the mathematical formalism used for illustrating. The method of the present example uses as input measured SPECT sinograms, a forward Monte Carlo simulator and an analytical inverse reconstruction algorithm. The forward Monte Carlo simulator and the inverse analytical reconstruction algorithm are respectively represented by the following operators : $F_{MC}$ and $A^{-1}$. $F_{mc}$ in the present example is a specific Monte Carlo based forward projector simulated for instance using GATE (Geant4 Application for Tomographic Emission) as for example described in Jan, S. et al. in "A simulation toolkit for PET and SPECT", Physics in Medicine and Biology, Vol. 49. 2004, pp. 4543-4561, thereby including a model for the patient, such as for example based on a computed tomography map, as well as a realistic accurate representation of the components of the imaging system to simulate image degrading effects, such as for example intrinsic camera resolution, depth dependent spatial blurring due to the collimator, etc. As indicated above, embodiments of the present invention are not limited to the particular forward projector used in this example and another forward projector also could be used. The analytical backprojector $A^{-1}$ can be based on intersection line lengths or a Gaussian rotator. In the latter case, the image matrix is first rotated and then projected perpendicularly for each detector angle.

The measured SPECT sinogram, which may be referred to as first tomography projection data, is indicated by $Y_{meas}$ and the sinogram of the forward Monte Carlo simulator is denoted by $Y_{MC}$. Images are represented by x. The sinograms are M-dimensional and the images are N-dimensional.

In a first step, starting from the measured SPECT sinogram $Y_{meas}$, a "coarse" image is reconstructed using the analytical inverse reconstruction algorithm :

$$x_A^* = A^{-1}\left(Y_{meas}\right) \qquad [1]$$

with $X_A^*$ being the reconstructed coarse image. This image is the first image of the iterative procedure, i.e.

$$x_{MC}^{(1)} = x_A^* \qquad [2]$$

whereby the iteration number (k) is set to (1) as initialization.

The forward Monte Carlo simulator then simulates a corresponding "fine" sinogram, starting from the "coarse" image obtained, in the first iteration being $x_{MC}^{(1)}$, in further iterations the space mapped images $x_{MC}^{(k)}$. The latter is expressed as

$$Y_{MC}^{(k)} = F\left(x_{MC}^{(k)}\right) \qquad\qquad [3]$$

Then a comparison is made between the obtained sinogram $Y_{MC}^{(k)}$ and the measured sinogram $Y_{meas}$, e.g. by performing a least square difference :

$$d_1^{(k)} = \sum_{i=1}^{M}\left(Y_{MC,i}^{(k)} - Y_{meas,i}\right)^2 \qquad\qquad [4]$$

With $Y_{MC,i}^{(k)}$, $Y_{meas,i}$ the i-th element of respectively the Monte Carlo sinogram and the measured sinogram. Alternative comparisons can be made between the Monte Carlo sinogram and the measured sinogram, e.g. using division, such as for example

$$d_2^{(k)} = \sum_{i=1}^{M}\frac{Y_{meas,i}}{Y_{MC,i}^{(k)}} \qquad\qquad [5]$$

The obtained Monte Carlo sinogram is then used as input for the analytical inverse reconstruction algorithm, i.e.

$$p^{(k)} = A^{-1}\left(\frac{Y_{meas}}{Y_{MC}^{(k)}}\right) \qquad\qquad [6]$$

This step (analytical inverse) is the so-called parameter extraction step, which provides advantageous effects of this algorithm. The division in the above equation is an element by element division. This is the reconstructed two-level image denoted in the flowchart.

A comparison can be made between this image and the reconstructed coarse image $x_A^*$ $x_A^*$ resulting in an error image $e^{(k)}$ :

$$e^{(k)} = p^{(k)} - x_A^* \qquad\qquad [7]$$

Based on the evolutionary information of the previous two-level images $p^{(k)}$, an evolutionary operator $B^{(k)}$ or parameter mapping operator, can be constructed that needs to approximate :

$$B^{(k)} = J_p^{(k)} \qquad\qquad [8]$$

In the first iteration k = 1, we assume that this operator is the identity mapping operator, i.e. $8^{(1)}$=I . For iterations whereby k > 1, this operator can for example be updated by a Broyden update, although embodiments of the present invention are not limited thereto.

Finally, an update of the image is calculated, i.e.

$$x^{(k+1)}_{MC} = x^{(k)}_{MC} + h^{(k)} \qquad [9]$$

whereby $h^{(k)}$ is a two-level step defined as

$$h^{(k)} = B^{(k)-1} e^{(k)} \qquad [10]$$

where the multiplication is carried out element-element wise, i.e. $B_{ij}^{-1} e_{ij}^{(k)}$ with elements i, j.

The counter k is then updated as k = k + 1 and the iteration process is restarted by applying the forward Monte Carlo simulator again as expressed by equation [3].

The algorithm stops when the update is smaller than a predetermined level e.g. $\|h^{(k)}\|\langle \varepsilon_1$ or when the difference between the obtained an simulated sinogram is smaller than a predetermined value. Another stopping criteria can be the total number of iterations of the algorithm applied.

It is to be noticed that it is additionally also possible to implement in the algorithm a mapping of the sinogram data to include also evolutionary data at that instance in the procedure. In that case, the obtained Monte Carlo sinogram then used as input for the analytical inverse reconstruction algorithm is determined by

$$p^{(k)} = A^{-1}\left(Y^{(k)}_{2L}\right) \qquad [11]$$

with $y_{2L}^{(k)}$ the two level sinogram where evolutionary information is included in the iterative process. The two-level sinogram can thereby be calculated by

$$Y^{(k)}_{2L} = S^{(k)} Y^{(k)}_{MC} \qquad [12]$$

with the response mapping operator $S^{(k)}$ in each iteration which is approximated as follows

$$S^{(k)} = J^{(k)}_{MC} \qquad [13]$$

For k = 1, $S^{(1)}$ =I is the identity operator, while for k > 1, $S^{(k)}$ can be calculated e.g. using a Broyden update of the Jacobian.

The algorithm can further be extended with a trust-region strategy and hybridized with a traditional solver. The iterative step taken in the space mapping algorithm can for example be limited so to stabilize the algorithm. More specifically, the step in equation [10] can be limited to low values as high values can destabilize the algorithm. A penalization to large values can be implemented.

The reconstruction method also can be such that when the space mapping algorithm is not converging, a switch occurs to a traditional method that reconstructs images with the Monte Carlo model only. This process can occur vice versa.

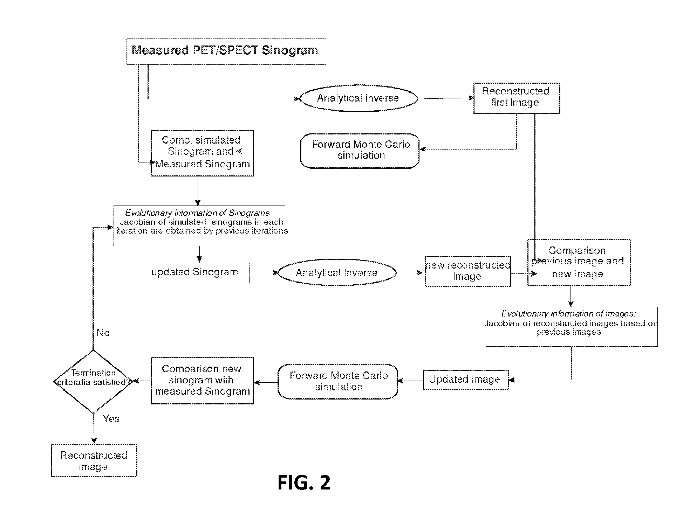

Further by way of illustration, a flow chart of an exemplary method according to an embodiment of the present invention is shown in FIG. 2, illustrating standard and optional steps of embodiments of the present invention.

In a first initialization loop indicated in the flow chart of FIG. 2, the method comprises as a first step obtaining measured tomography sinograms, e.g. PET or SPECT sinograms. The obtained measured PET/SPECT sinogram is used as input sinogram. Based on the input sinogram, a first image, also referred to as coarse image, is determined using a coarse backward projecting model, being an analytical inverse model for reconstructing a reconstructed image from first tomography data, i.e. from projection data previously obtained through simulation. Typical algorithms that may be used can be an ordered subset-expected maximization (OS-EM), although also others can be used, such as for example maximum likelihood expectation maximization (MLEM), Algebraic Reconstruction Technique (ART), Simultaneous Iterative Reconstructive technique (SIRT), ... The result is a reconstructed coarse image.

Based on the reconstructed coarse image, a forward Monte Carlo model is applied for simulating a sinogram. The simulated sinogram is then compared with the input sinogram and an updated simulation sinogram is then determined. Updating of the simulation sinogram thereby advantageously may make use after the first iteration of evolutionary information of the sinograms. Such evolutionary information may include a Jacobian of the simulated sinograms based on one or more previously determined sinograms.

The updated sinogram is then used as input sinogram for the iteration loop used in the method :

The updated sinogram is used by applying thereto the coarse backward projecting analytical model for the reconstruction of a new image. The new reconstruction image then is compared with the previously obtained image and an updated reconstruction image is determined. The updated reconstruction image may advantageously make use of evolutionary information of the images. The evolutionary information may include a Jacobian of reconstructed images based on one or more previously determined images.

Starting from the updated reconstruction image, a Forward Monte Carlo simulation is applied for determining a new simulated sinogram. The new simulated sinogram is compared with the measured sinogram. Depending on whether the comparison fulfills predetermined termination criteria, the procedure is either stopped and the updated reconstruction image is considered the final reconstruction image or the sinogram is updated e.g. based on evolutionary information and used as new input from which a new iteration is performed.

Repetition of the iterative loop is performed until the termination criteria are fulfilled, i.e. until a sufficiently small difference is found between the simulated sinogram and the originally obtained sinogram (e.g. obtained by measurement) or until the number of iterations reaches a maximum number of iterations set.

In one aspect, the present invention also relates to a method for updating a system such as for example a tomography system, whereby a processor is altered or replaced so that the system comprises a processor configured for performing image reconstruction according to a method of an embodiment of the present invention. It is an advantage of embodiments of the present invention that current systems can be easily updated and that no significant changes to the hardware need to be done. The latter results in a cost and time efficient solution for upgrading existing systems. While the invention has been illustrated and described in detail in the drawings and foregoing description, such illustration and description are to be considered illustrative or exemplary and not restrictive. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The processor thereby may be CPU or GPU or a combination of both. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

The foregoing description details certain embodiments of the invention. It will be appreciated, however, that no matter how detailed the foregoing appears in text, the invention may be practiced in many ways, and is therefore not limited to the embodiments disclosed. It should be noted that the use of particular terminology when describing certain features or aspects of the invention should not be taken to imply that the terminology is being re-defined herein to be restricted to include any specific characteristics of the features or aspects of the invention with which that terminology is associated.

**Claims**

1. A method for performing tomography image reconstruction, the method comprising

   - applying an analytical inverse model for reconstructing a reconstructed image from first tomography projection data,
   - applying a forward Monte Carlo model on the reconstructed image or an image based thereon for deriving second tomography projection data,

   the method comprising performing space mapping between the analytical inverse model and the Monte Carlo model.

2. A method according to claim 1, the method furthermore comprising comparing the obtained second tomography projection data with the first tomography projection data and, if predetermined criteria are not fulfilled, determining new first tomography projection data based on the derived second tomography projection data for iteratively applying the analytical inverse model and subsequently applying the forward Monte Carlo model.

3. A method according to any of the previous claims, wherein space mapping comprises mapping between a parameter space of the Monte Carlo model and a parameter space of the analytical inverse model and/or mapping between a response space of the Monte Carlo model and a response space of the analytical inverse model.

4. A method according to any of the previous claims, wherein space mapping comprises performing a parameter extraction step by applying the analytical inverse reconstruction algorithm to tomography data obtained using the Monte Carlo model.

5. A method according to any of the previous claims, wherein the Monte-Carlo model is an patient specific Monte-Carlo model.

6. A method according to any of the previous claims, wherein the method comprises using evolutionary data based on previously obtained tomography data for determining the new first tomography projection data for a subsequent iterative process.

7. A method according to any of the previous claims, wherein the method comprises using evolutionary data based on previously obtained reconstructed images.

8. A method according to any of the previous claims, wherein the method comprises applying a trust-region strategy.

9. A method according to any of the previous claims, wherein the reconstruction algorithm is hybridized with a conventional reconstruction algorithm that only uses the Monte Carlo simulation method.

10. A method according to any of the previous claims, the method being implemented as a computer program product.

11. A method according to any of the previous claims, the method being implemented as a computer program product stored on a machine readable data storage device.

12. A system for performing image reconstruction, the system comprising a processor wherein the processor comprises

    - an analytical inverse modeling means for analytically inverse modeling of first tomography projection data for reconstructing a reconstructed image,
    - a forward Monte Carlo modeling means for forward Monte Carlo modeling of the reconstructed image or an image based thereon for deriving second tomography projection data, and

    the processor being programmed for performing space mapping between the analytical inverse model and the Monte Carlo model.

13. A system according to claim 12, wherein the processor is programmed for mapping the parameter space of the Monte Carlo model to the parameter space of the analytical inverse model.

14. A system according to claim 12, wherein the system furthermore is adapted for performing a method according to any of claims 1 to 11.

15. A system according to any of claims 12 to 14, wherein the system furthermore is adapted for obtaining tomography data.

**FIG. 1**

**Measured PET/SPECT Sinogram**

Analytical Inverse → Reconstructed first Image

Comp. simulated Sinogram and Measured Sinogram

Forward Monte Carlo simulation

*Evolutionary information of Sinograms:*
*Jacobian of simulated sinograms in each iteration are obtained by previous iterations*

updated Sinogram → Analytical Inverse → new reconstructed Image → Comparison previous image and new image

*Evolutionary information of Images:*
*Jacobian of reconstructed images based on previous images*

No

Termination criteratia satisfied?

Comparison new sinogram with measured Sinogram ← Forward Monte Carlo simulation ← Updated image

Yes

Reconstructed image

**FIG. 2**

Europäisches
Patentamt

European
Patent Office

Office européen
des brevets

# EUROPEAN SEARCH REPORT

Application Number

EP 10 15 0912

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | STAELENS ET AL: "Monte Carlo--Based Image Reconstruction in Emission Tomography" In: "COMPUTATIONAL INTELLIGENCE IN MEDICAL IMAGING: TECHNIQUES AND APPLICATIONS" 24 March 2009 (2009-03-24), , XP009132203 , pages 407-432 * the whole document * ----- | 1-15 | INV. G06T11/00 |
| X | TOM GHEKIERE ET AL: "Using GATE as a forward projector in iterative SPECT reconstruction" NUCLEAR SCIENCE SYMPOSIUM CONFERENCE RECORD, 2008. NSS '08. IEEE (19-25 OCT. 2008), IEEE, PISCATAWAY, NJ, USA, 19 October 2008 (2008-10-19), pages 611-615, XP031418358 ISBN: 978-1-4244-2714-7 * the whole document * ----- | 1-15 | |

**TECHNICAL FIELDS SEARCHED (IPC)**

G06T

The present search report has been drawn up for all claims

| Place of search | Date of completion of the search | Examiner |
|---|---|---|
| Munich | 19 April 2010 | Werling, Alexander |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JAN, S. et al.** A simulation toolkit for PET and SPECT. *Physics in Medicine and Biology,* 2004, vol. 49, 4543-4561